# EUROPÄISCHE PATENTANMELDUNG

(11) **EP 4 589 793 A1**
(43) Veröffentlichungstag der Anmeldung: **23.07.2025**
(21) Anmeldenummer: 25151885.8
(22) Anmeldetag: 15.01.2025
(51) Int. Cl.: H02G 3/08

(54) **INSTALLATIONSGEHÄUSE**

(30) Priorität: 22.01.2024 DE 202024100315 U
(71) Anmelder: OBO Bettermann Hungary Kft., 2347 Bugyi (HU)
(72) Erfinder: HARMS, Heiko, 58708 Menden (DE)
(74) Vertreter: Haverkamp Patentanwälte PartG mbB

(57) **Zusammenfassung**

Die Erfindung betrifft ein Installationsgehäuse 1 aus einem Kunststoff mit einer in einem Gehäuseabschnitt angeordneten Ausbrechöffnung 8 zum Einführen eines Langguts wie eines elektrischen oder optischen Leiters, eines Leerrohres oder dergleichen in das Innere des Installationsgehäuses 1, wobei die Ausbrechöffnung 8 im Auslieferungszustand durch einen mit dem Rand der Ausbrechöffnung 8 verbundenen Verschlusskörper 9 zumindest im Wesentlichen geschlossen ist, welcher Verschlusskörper 9 mit dem Gehäuseabschnitt trennbar verbunden ist, sodass durch ein Herausbrechen des Verschlusskörpers 9 die Ausbrechöffnung 8 geöffnet wird, wobei der Verschlusskörper 9 einen ersten Bereich 11 erhöhter Durchstoßfestigkeit und einen von dem ersten Bereich 11 zumindest abschnittsweise umgebenden, an den ersten Bereich 11 spaltlos angrenzenden, zweiten Bereich 12 verringerter Durchstoßfestigkeit aufweist, wobei das Installationsgehäuse 1 dazu eingerichtet ist, dass in den zweiten Bereich 12 eine Einführöffnung durch ein Durchstoßen oder Herausschneiden des den zweiten Bereich 12 bereitstellen Material einbringbar ist und wobei die beiden Bereiche durch eine einen sich in den zweiten Bereich 12 ausbreitenden Riss aufhaltende Struktur- und/oder Materialänderung getrennt sind.

## Beschreibung

Die Erfindung betrifft ein Installationsgehäuse aus einem Kunststoff mit einer in einem Gehäuseabschnitt angeordneten Ausbrechöffnung zum Einführen eines Langguts wie eines elektrischen oder optischen Leiters, eines Leerrohres oder dergleichen in das Innere des Installationsgehäuses, wobei die Ausbrechöffnung im Auslieferungszustand durch einen mit dem Rand der Ausbrechöffnung verbundenen Verschlusskörper zumindest im Wesentlichen geschlossen ist, welcher Verschlusskörper mit dem Gehäuseabschnitt trennbar verbunden ist, sodass durch ein Herausbrechen des Verschlusskörpers die Ausbrechöffnung geöffnet wird.

Elektrotechnischen Installationen dienende Gehäuse sind beispielsweise Installationsdosen wie Unterputzdosen, Hohlwanddosen etc., aber auch Abzweigdosen, Schaltkästen oder dergleichen. Derartige Gehäuse sind typischerweise aus einem formstabilen Hartkunststoff hergestellt. Diesen Gehäusen ist gemein, dass Langgüter, also: Kabel oder Leerrohre, durch eine Wand des Gehäuses zum Anschließen an in dem Gehäuse enthaltenen elektrischen und/oder elektronischen Geräten oder Aggregaten eingeführt werden sollen. Zu diesem Zweck verfügen derartige Gehäuse in vorbestimmten Gehäuseabschnitten über vorbereitete Kabeleinführungen, durch die das entsprechende Langgut durch die Gehäusewand hindurchgeführt werden kann.

Die Kabeleinführungen sind üblicherweise als Ausbrechöffnung ausgestaltet. Diese weisen, der Auslegung der Kabel bzw. Leerrohre nachempfunden, üblicherweise eine kreisrunde Umrissgeometrie auf. Eine Ausbrechöffnung stellt mithin eine Durchbrechung in einer Wand des Gehäuses dar. Die Ausbrechöffnungen sind im Auslieferungszustand zunächst geschlossen. Geöffnet werden nur diejenigen Ausbrechöffnungen, die bei der Installation benötigt werden.

Zum Verschließen der Ausbrechöffnung dient ein Verschlusskörper. Es kann vorgesehen sein, dass der Rand der Ausbrechöffnung von dem Verschlusskörper durch einen Spalt getrennt ist, welcher Spalt durch Sollbruchstege abschnittsweise überbrückt ist. Der Spalt stellt die Sollbruchlinie dar, entlang der der Verschlusskörper von dem Gehäuseabschnitt des Installationsgehäuses getrennt wird: Zum Öffnen einer solchen Ausbrechöffnung werden die Stege zertrennt, etwa durch Aufbringen eines Ausbrechdruckes auf den Verschlusskörper, und der Verschlusskörper wird aus der Ausbrechöffnung entfernt. Es sind auch Ausgestaltungen bekannt, bei denen der Spalt mit einem Film abschnittsweise verschlossen ist; dieses hindert ein manuelles Herausbrechen des Verschlusskörpers nicht.

Der Verschlusskörper ist üblicherweise an den Rand der Ausbrechöffnung angeformt und wird bereits bei der Herstellung des Installationsgehäuses - üblicherweise in einem Spritzgussverfahren - in der gleichen Form wie das Installationsgehäuse insgesamt geformt.

Um bei einer solchen Konzeption einer Ausbrechöffnung Kabel oder Leerrohre mit unterschiedlichem Durchmesser hindurchführen zu können, ohne dass bei im Durchmesser kleineren Kabeln oder Rohren ein übermäßig weiter Ringspalt verbleibt, sind in einer ersten Ausgestaltung Ausbrechöffnungen entwickelt worden, bei denen der vorstehend beschriebene Verschlusskörper selbst wenigstens ein etwa konzentrisch angeordnetes Verschlusskörperteil trägt. Dieses ist in gleicher Weise durch Materialbrücken an das äußere Verschlusskörperteil angeschlossen. Beide Verschlusskörperteile bilden den die Ausbrechöffnung verschließenden Verschlusskörper. Wird nur eine im Durchmesser kleinere Öffnung bei einer Kabeleinführung benötigt, wird lediglich das innere Verschlusskörperteil herausgebrochen. Eine solche Ausgestaltung zeigt etwa DE 20 2018 006 675.

Gemäß einer anderen Ausgestaltung kann eine Kabeleinführung als Einführöffnung ausgestaltet sein. Diese Einführöffnung ist im Auslieferungszustand mit einer elastischen Weichkunststoffmembran überspannt. Bei einer solchen Ausgestaltung stellt die Weichkunststoffmembran den Verschlusskörper dar. Derartige Verschlusskörper werden eingesetzt, wenn eine Kabel- oder Leerrohreinführung eine gewisse Winddichtigkeit aufweisen soll. Konzentrisch zueinander angeordnete, erhabene Wülste kennzeichnen den vorgesehenen Einsteckbereich zum Ein- bzw. Durchstecken eines Kabels oder Leerrohres. Zum Einführen eines Leergutes wird diese weiche Kunststoffmembran durchstoßen, sodass eine Einführöffnung bereitgestellt wird. Auch ein Herausschneiden eines Teils der Membran ist denkbar.

In manchen Fällen wird gefordert, dass die in ein solches Gehäuse eingeführten Kabel in einer solchen Ausbrechöffnung mit einer gewissen Rückhaltekraft gehalten sind, damit das durch die Ausbrechöffnung hindurchgeführte Kabel oder Leerrohr nicht unbeabsichtigt wieder herausgezogen werden kann. Zudem wird üblicherweise gefordert, dass das Gehäuse auch im Bereich einer Kabeleinführung den erforderlichen Schutzgrad aufweist, mithin ein Eindringen von Fremdkörpern verhindert ist. Angegeben wird dieses zu einem Gehäuse mit der sogenannten Schutzart IP (Ingress Protection) gemäß DIN EN 60529.

Ausgehend von der ersten Ausgestaltung ist bei Verschlusskörpern, die abermals über eine eigene Ausbrechöffnung verfügen, problematisch, dass die Größe dieser kleineren Ausbrechöffnung fest vorgegeben ist. Gerade Langgüter mit kleinerem Durchmesser, die durch die kleinere Ausbrechöffnung geführt werden, sollten jedoch aufgrund ihrer geringeren Steifigkeit eine verbesserte Rückhaltung durch die Installationsdose erfahren.

Vor diesem Hintergrund ist es ausgehend von der ersten Ausgestaltung Aufgabe der Erfindung ein verbessertes Installationsgehäuse bereitzustellen, bei dem auch für Langgüter kleineren Durchmessers eine Rückhaltung durch das Installationsgehäuse erfolgen kann.

Gelöst wird diese Aufgabe durch ein eingangs genanntes, gattungsgemä-ßes Installationsgehäuse, bei dem der Verschlusskörper einen ersten Bereich erhöhter Durchstoßfestigkeit und einen von dem ersten Bereich zumindest abschnittsweise umgebenden, an den ersten Bereich spaltlos angrenzenden, zweiten Bereich verringerter Durchstoßfestigkeit aufweist, wobei das Installationsgehäuse dazu eingerichtet ist, dass in den zweiten Bereich eine Einführöffnung durch ein Durchstoßen oder Herausschneiden des den zweiten Bereich bereitstellen Material einbringbar ist und wobei die beiden Bereiche durch eine einen sich in den zweiten Bereich ausbreitenden Riss aufhaltende Struktur- und/oder Materialänderung getrennt sind.

Weitere vorteilhafte Ausgestaltungen ergeben sich aus den abhängigen Ansprüchen und der Beschreibung.

Der Kern der Erfindung liegt in der Bereitstellung eines Verschlusskörpers, der einerseits gegenüber dem Gehäuseabschnitt durch einen Spalt, eine Solltrennlinie bildend, getrennt ist und zur Öffnung einer Ausbrechöffnung herausgebrochen wird, und andererseits selbst einen Bereich bereitstellt, der zur Einführung eines Langgutes variabel durchstoßbar ist, sodass eine so entstehende Einführöffnung situativ und individuell durch den Installateur in ihrer Querschnittsgeometrie ausgestaltet werden kann. Eine Ausbrechöffnung wird somit in geschickter Weise mit einer Einführöffnung kombiniert.

Hierfür ist gemäß der Erfindung vorgesehen, dass der Verschlusskörper zwei Bereiche aufweist, die bezüglich ihrer Durchstoßfestigkeit unterschiedlich ausgelegt sind: einen ersten Bereich erhöhter Durchstoßfestigkeit und einen zweiten Bereich verringerter Durchstoßfestigkeit. Vorgesehen ist, dass in den zweiten Bereich verringerter Durchstoßfestigkeit eine Einführöffnung durch ein Durchstoßen oder Herausschneiden des den zweiten Bereich bereitstellenden Materials einbringbar ist. Hierfür sind die hierfür relevanten Abschnitte und Teile des Installationsgehäuses entsprechend ausgelegt, etwa die Verbindung zwischen Verschlusskörper und Gehäuseabschnitt, der zweite Bereich gegenüber dem ersten Bereich und nicht zuletzt die optische Ausgestaltung, die den Installateur dazu hinleitet, dass ein Durchstoßen des zweiten Bereiches zu einer bestimmungsgemäßen Einführöffnung führt.

Die angesprochene Durchstoßfestigkeit ist ein Maß für den Widerstand des Materials gegen eine Kraftaufbringung durch einen im Wesentlichen spitzen Gegenstand wie etwa einen Kreuz-Schraubendreher oder eine Messerspitze. Durch das Bereitstellen einer verringerten Durchstoßfestigkeit wird erzielt, dass nur der zweite Bereich - und nicht der erste Bereich - zur Bereitstellung einer Einführöffnung in dem Wandabschnitt zumindest abschnittsweise öffenbar ist und der Verschlusskörper, insbesondere der erste Bereich des Verschlusskörpers, mit dem Gehäuseabschnitt verbunden verbleibt. Der Verschlusskörper wird somit nicht herausgebrochen.

Der Unterschied der Durchstoßfestigkeit kann etwa durch eine verringerte Wandstärke des zweiten Bereichs, einen härteren Kunststoff des ersten Bereichs oder sonstiger geometrischer, den ersten Bereiche aussteifenden oder den zweiten Bereich schwächenden Strukturen bereitgestellt werden. Im Wesentlichen weisen der erste Bereich und der zweite Bereich jedoch jeweils eine eigene einheitliche Wandstärke auf; dies vereinfacht die Herstellung.

Besonders vorteilhaft wird zur Bereitstellung der verschiedenen Durchstoßfestigkeiten eine Verringerung der Wandstärke des zweiten Bereiches gegenüber dem ersten Bereich angesehen. Hierdurch ist eine einfache Möglichkeit der Verringerung der Durchstoßfestigkeit geschaffen, die in der Produktion einfach umsetzbar ist.

Zwischen dem ersten und dem zweiten Bereich kann ein Übergangsbereich vorgesehen sein. In diesem wird etwa die Wandstärke des ersten Bereichs etwas verringert.

Wichtig ist jedoch, dass der erste und der zweite Bereich integral ausgebildet sind. Das bedeutet: sie sind nicht voneinander durch eine Perforation oder eine eingeprägte Kerbe, einen ggf. abschnittsweise gefüllten Spalt bildend, getrennt. Stattdessen sind die beiden Bereiche durch eine einen sich in den zweiten Bereich ausbreitenden Riss aufhaltende Struktur- und/oder Materialänderung getrennt, etwa durch eine abrupte Änderung der Wandstärke, eine Wulst oder dergleichen. Hierdurch wird sichergestellt, dass sich ein in dem zweiten Bereich ausbreitender Riss während des Einbringens der Einführöffnung nur bis zu der Grenze zwischen erstem und zweitem Bereich ausbreitet und so verhindert wird, dass die Einführöffnung eine zu große Größe aufweist. Auch wird so sicherstellt, dass die Einführöffnung nur in den zweiten Bereich einbringbar ist. Durch die Struktur- und/oder Materialänderung wird eine definierte Rissgrenze bereitgestellt, die insbesondere bei einer bestimmungsgemäßen Benutzung werkzeug- und kraftunabhängig ist.

Die Durchstoßfestigkeit im zweiten Bereich ist im Wesentlichen einheitlich. Auf diese Weise steht es dem das Installationsgehäuse nutzenden Installateur frei, an welcher Position die Einführöffnung in den zweiten Bereich eingebracht wird und auch in welcher Größe.

Es kann von einem Installateur vorgesehen sein, dass der zweite Bereich nicht vollständig durchstoßen bzw. herausgeschnitten wird, sondern nur ein Teilbereich hiervon. Dies kann werksseitig dadurch unterstützt werden, dass der zweite Bereich über zumindest einen von seiner Oberfläche abragenden Steg verfügt, der den zweiten Bereich in mehrere Teilbereiche unterteilt. Üblicherweise ragt ein solcher Steg von der nach außen weisenden Oberfläche des zweiten Bereichs ab. Dieser zumindest eine abragende Steg kann nicht nur zur Visualisierung der Teilbereiche genutzt werden, sondern verstärkt Ränder der vorgesehenen Teilbereiche, um die Gefahr eines Einreißens über den entsprechenden Teilbereich hinaus beim Durchstoßen oder Schneiden zu vermindern. So können auch mehrere Stege dieser Art auf dem zweiten Bereich zur Verfügung gestellt werden. Ferner kann vorgesehen sein, dass der Steg in mehrere Teilstege unterteilt ist, sodass sich stegverstärkte mit unbestegten Abschnitten abwechseln. Hierdurch wird die notwendige Flexibilität des zweiten Bereichs nicht übermäßig eingeschränkt, wenngleich eine Stabilisierung des Randes einer möglichen Einführöffnung gewährleistet ist. Es versteht sich, dass diese Stege eine wesentlich geringere Struktur- und/oder Materialänderung darstellen als die Grenze zum ersten Bereich. Die Kraft, die benötigt wird auch über einen Teilbereich hinweg eine Einführöffnung in den zweiten Bereich einzubringen ist um ein Vielfaches kleiner als einen Riss in den ersten Bereich einzubringen.

Insbesondere kann die Einführöffnung so angepasst sein, dass der Rand der Einführöffnung bei einem Einführen des Langgutes von außen in das Installationsgehäuse in Richtung des Installationsgehäuses eingestülpt wird. Hierfür weist das den zweiten Bereich bildende Material bzw. dessen Struktur eine ausreichende Flexibilität auf. Durch das Einstülpen erfolgt selbsttätig eine Zugkraftaufnahme entgegen einer das Langgut aus dem Installationsgehäuse herausziehenden Kraft. Der Rand der Einführöffnung liegt hierfür bevorzugt umfänglich an dem Langgut an.

Ferner ist vorgesehen, dass die nach außen weisende Oberfläche des zweiten Bereichs gegenüber der nach außen weisenden Oberfläche des ersten Bereichs zurückversetzt ist. Die zu dem Installationsgehäuseinneren weisenden Oberfläche des zweiten Bereichs kann dagegen bevorzugt mit der entsprechenden Oberfläche des ersten Bereiches fluchten. Nach innen ist der Verschlusskörper dann im Wesentlichen glatt ausgestaltet. Durch das Zurückversetzen der nach außen weisenden Oberfläche des zweiten Bereichs gegenüber dem ersten Bereich kann nicht nur eine dünnere Wandstärke in dem zweiten Bereich gegenüber dem ersten Bereich realisiert werden, sondern der zweite Bereich kann durch einen Installateur besser identifiziert werden. Durch die zurückversetzte Oberfläche des zweiten Bereichs gegenüber dem ersten Bereich wird in den Verschlusskörper eine Vertiefung eingebracht. In dieser Vertiefung wird ein Durchstoßwerkzeug radial geführt, sodass ein Abrutschen während des Durchstoßens in den ersten Bereich vermieden wird. Das Durchstoßwerkzeug kann auf dem zweiten Bereich intuitiv positioniert werden.

Es kann ferner vorgesehen sein, dass der Verschlusskörper im Wesentlichen in einer Ebene mit dem die Ausbrechöffnung umgebendem Material ist. Der Verschlusskörper steht gegenüber dem Rand der Ausbrechöffnung und dem die Ausbrechöffnung umgebenden Material dann nicht hervor. Es wird ein Installationsgehäuse mit einer im Wesentlichen einheitlichen Wandstärke bereitgestellt, so dass diese insbesondere in Bohrungen einer Wand einfach eingesetzt werden kann. Auch wird hierdurch die Bereitstellung des Herstellungswerkzeugs zur Produktion des Installationsgehäuses in seiner Geometrie und seinem Formungsverhalten vereinfacht.

In einer ersten bevorzugten Ausgestaltung ist vorgesehen, dass der Verschlusskörper aus einem einheitlichen Hartkunststoff hergestellt ist. Ein solcher Hartkunststoff ist formstabil und wird für Installationsgehäuse in der Elektrotechnik mannigfaltig eingesetzt. Es ist üblicherweise der gleiche Kunststoff, aus dem das Installationsgehäuse insgesamt bereitgestellt ist; das Installationsgehäuse erhält hierdurch die notwendige Formstabilität. Der Verschlusskörper und das Installationsgehäuse können so besonders einfach, nämlich durch Nutzung des identischen Kunststoffes in einer Form und einstückig, bereitgestellt werden.

In dieser Ausgestaltung kann vorgesehen sein, dass der zweite Bereich als Hartkunststofffilm bereitgestellt ist. Als Kunststofffilm wird eine Wandstärke im Bereich von kleiner 1 mm angesehen. Ein solcher Kunststofffilm ist hauchdünn und damit relativ leicht zu durchstoßen. Ist er jedoch intakt, verschließt er den zweiten Bereich dicht. Überdies ist ein solcher Kunststofffilm auch wenn aus einem Hartkunststoff bereitgestellt, aufgrund seiner geringen Wandstärke in einem gewissen Maß, welches für die vorliegenden Zwecke ausreicht, flexibel, um eine Rückhaltung eines eingeführten Langgutes sicherzustellen. Er weist hierfür üblicherweise die notwendige Flexibilität zum Einstülpen in das Gehäuseinnere auf, ist jedoch gleichzeitig so fest, als dass eine effektive Zugentlastung ermöglicht wird.

In einer anderen bevorzugten Ausgestaltung ist vorgesehen, dass der Verschlusskörper im Wege eines 2K-Kunststoffgießverfahren, insbesondere einem Spritzgussverfahren, hergestellt ist, wobei der erste Bereich aus einem Hart- und der zweite Bereich aus einem Weichkunststoff bereitgestellt ist. Der zweite Bereich ist dann als Weichkunststoffmembran ausgestaltet. Ein solches 2K-Herstellungsverfahren betrifft üblicherweise das gesamte Installationsgehäuse. Der eingesetzte Weichkunststoff weist inhärent eine geringere Durchstoßfestigkeit auf als der Hartkunststoff, sodass unabhängig von unterschiedlichen Wandstärken der beiden Bereiche die erfindungsgemä-ßen Vorteile üblicherweise erzielt werden. Insbesondere weist durch den Einsatz eines Weichkunststoffes der zweite Bereich die erforderliche Flexibilität auf, damit eine in diesen zweiten Bereich eingebrachte Einführöffnung sich an die Querschnittsgeometrie eines eingeführten Langguts flexibel anpasst. Gleichzeitig wird durch den Einsatz von Hartkunststoff im Bereich des ersten Bereiches ein stabiles Gegenlager bereitgestellt, sodass der Ort der Einführöffnung und damit der Eintrittsort des Langgutes in das Installationsgehäuse während der Installation exakt vorgegeben verbleibt. Auch wird hierdurch das auf den zweiten Bereich begrenzte Durchstoßen bzw. Herausschneiden unterstützt.

In dieser Ausgestaltung kann auch vorgesehen sein, dass ein Spalt zwischen Verschlusskörper und Rand der Ausbrechöffnung mit einem Weichkunststoff verfüllt oder überdeckt ist. So kann die Weichkunststoffkomponente auch den Übergang zwischen Verschlusskörper und die Ausbrechöffnung umgebenden Material überdecken und so eine Winddichtigkeit der Ausbrechöffnung erzielt werden. Der Weichkunststoff verhindert ein einfaches Ausbrechen des Verschlusskörpers aus der Ausbrechöffnung üblicherweise nicht.

Es kann grundsätzlich vorgesehen sein, dass der zweite Bereich von dem ersten Bereich vollumfänglich umgeben ist. Durch das umfängliche Einfassen bzw. Einbetten des zweiten Bereiches durch den ersten Bereich ist der zweite Bereich umfänglich an dem ersten Bereich in seinem Randbereich stabilisiert.

In einer besonderen Ausgestaltung ist das Installationsgehäuse als Installationsdose, einzusetzen in Hohlwänden oder im Unterputzbereich bei der Elektroinstallation, ausgestaltet. Dann ist der Gehäuseabschnitt Teil einer Dosenwand und/oder eines Dosenbodens einer Installationsdose, bevorzugt im abgerundeten oder abgeflachten Fasenbereich zwischen Dosenboden und -wand ist. Insbesondere bei solchen Installationsdosen ergibt sich der Bedarf einer situativ anpassbaren Öffnung zum Einbringen von Langgütern, insbesondere Kabeln, in das Doseninnere. Gleichzeitig ist der Installationsraum beengt. Durch das variable Vorsehen einer Einführung in dem zweiten Bereich durch Durchstoßen oder Herausschneiden des den zweiten Bereich bereitstellenden Materials, angepasst an das einzuführende Langgut, kann eine verbesserte Rückhaltung des Langgutes erzielt werden und gleichzeitig vermieden werden, dass zu große Ausbrechöffnungen zu einer ungewollten Verschmutzung des Installationsdoseninneren führen.

Die Erfindung wird anhand der beiliegenden Figuren näher erläutert. Es zeigen:
- **Fig.** 1:: Eine dreidimensionale Ansicht auf ein erfindungsgemäßes Installationsgehäuse,
- Fig. 2:: einen geschnittenen Detailausschnitt des Installationsgehäuses aus Figur 1 und
- Fig. 3:: eine gegenüber Figur 2 um 90° gedrehte geschnittene Detailansicht des Installationsgehäuses aus Figur 1.

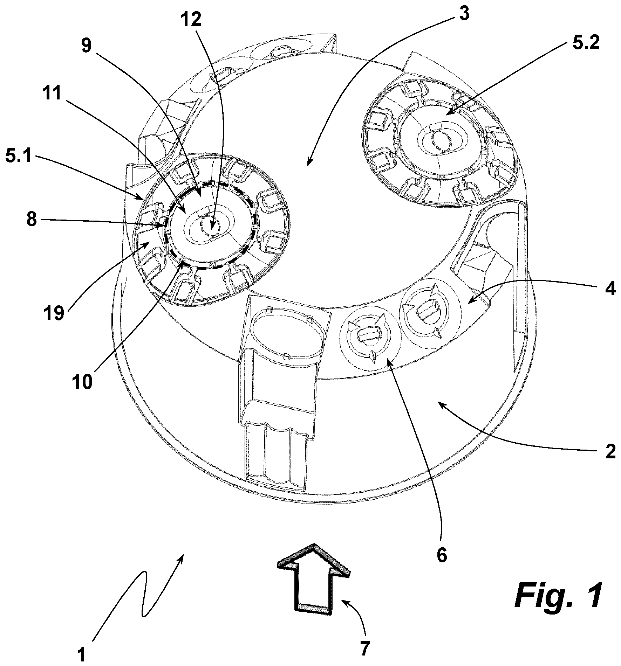

Figur 1 zeigt ein im Wege eines Spritzgussverfahrens hergestelltes Installationsgehäuse 1, ausgestaltet als Installationsdose, aufweisend eine Dosenwand 2 sowie einen Dosenboden 3. Der Übergang zwischen Dosenwand 2 und Dosenboden 3 ist als Fasenbereich 4 ausgestaltet, der im Vorliegenden abgeflacht ist. In dem Fasenbereich 4, teilweise hineinragend in den Dosenboden 3, sind an vorgesehenen Positionen im Auslieferungszustand geschlossene Kabeleinführungen 5.1, 5.2, 6 vorgesehen, durch die Langgüter in das Installationsgehäuseinnere eingeführt werden können. Das Installationsgehäuseinnere ist zugänglich über eine hier nicht erkennbare unverschlossene Seite; der Zugang zu dem Inneren des Installationsgehäuses 1 erfolgt aus Richtung des eingezeichneten dreidimensionalen Pfeils 7.

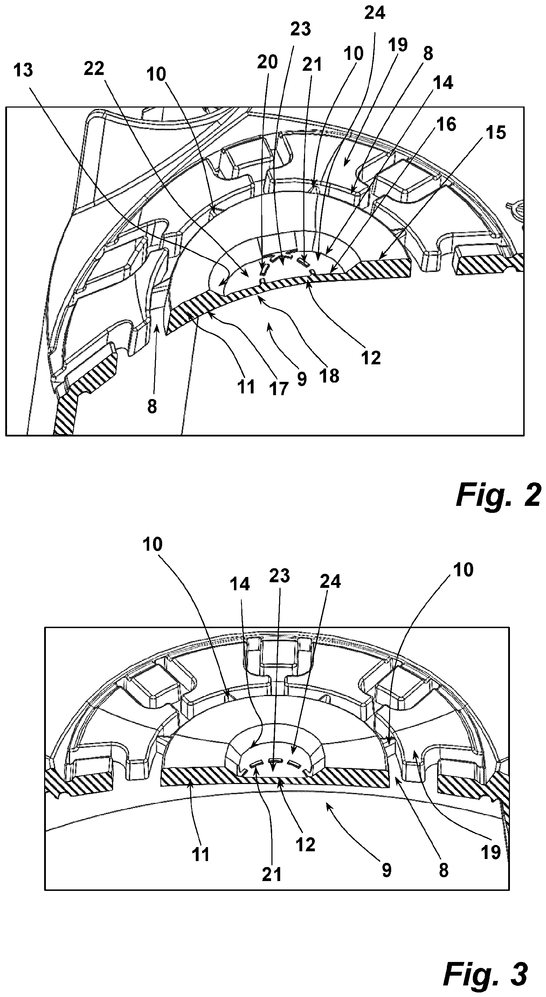

Zwei Kabeleinführungen 5.1, 5.2 sind als kombinierte Ausbrech- und Einführöffnungen ausgestaltet, wovon eine (5.1) nachstehend näher erläutert wird. In Figur 1 ist der äußere Rand einer Ausbrechöffnung 8 mit einer gestrichelten Linie gekennzeichnet. Diese Ausbrechöffnung 8 ist durch einen Verschlusskörper 9 im Auslieferungszustand geschlossen. Der Verschlusskörper 9 ist durch einen Spalt von dem Rand der Ausbrechöffnung 8 getrennt, welcher Spalt durch Sollbruchstege 10 abschnittsweise überbrückt ist, sodass eine ausreichend stabile Verbindung zwischen Verschlusskörper 9 und dem die Ausbrechöffnung 8 umgebenden Material 19 gegeben ist (siehe auch Figuren 2 und 3, in denen diese beispielhaft mit Bezugszeichen versehen sind).

Der Verschlusskörper 9 kann zum Öffnen der Ausbrechöffnung 8 herausgebrochen werden. Hierzu werden die Sollbruchstege 10 getrennt und der Verschlusskörper 9 entfernt.

Es besteht jedoch auch die Möglichkeit, eine Einführöffnung in den Verschlusskörper 9 einzubringen. Hierfür umfasst der Verschlusskörper 9 einen ersten Bereich 11 und einen zweiten Bereich 12. Der zweite Bereich 12 ist von dem ersten Bereich 11 vollständig umgeben.

Die beiden Bereiche 11, 12 werden mit Bezugnahme auf die Figuren 2 und 3 näher erläutert. Die beiden Figuren zeigen geschnittene dreidimensionale Ansichten; der Schnitt ist jeweils durch eine Halbachse des Verschlusskörpers 9 gelegt.

Wie in Figur 2 zu erkennen, umfasst der Verschlusskörper 9 einen ersten Bereich 11, von dem sich der zweite Bereich 12 dadurch unterscheidet, dass letzterer eine verringerte Wandstärke, mithin eine verminderte Dicke aufweist. Durch die verringerte Wandstärke des zweiten Bereiches 12 ist seine Durchstoßfestigkeit gegenüber dem ersten Bereich 11 herabgesetzt: Der zweite Bereich 12 kann problemlos mittels eines spitzen Gegenstandes, etwa einem Kreuz-Schraubendreher oder der Spitze eines Messers durchstoßen werden. Die Durchstoßfestigkeit des zweiten Bereichs 12 ist so gering, dass bei einer Druckeinwirkung durch einen spitzen Gegenstand auf diesen zweiten Bereich 12 dieser durchstoßen wird, bevor der Verschlusskörper 9 insgesamt aus der Ausbrechöffnung 8 herausgebrochen wird, mithin bevor die Sollbruchstege 10 brechen.

Beide Bereiche 11, 12 weisen jeweils eine im Wesentlichen gleichbleibende Wandstärke auf.

Der erste Bereich 11 geht mittels eines Übergangsbereichs 13 in den zweiten Bereich 12 über. Es wird im Übergang vom Übergangsbereich 13 zu dem zweiten Bereich 12 jedoch eine eindeutige Kante 14 bereitgestellt, darstellend eine Strukturänderung. Diese Kante 14 dient der Trennung des zweiten Bereichs 12 von dem den Übergangsbereich 13 aufweisenden ersten Bereich 11, damit ein sich in dem zweiten Bereich 12 ausbreitender Riss infolge der Öffnung einer Einführöffnung sich nicht in den ersten Bereich 11 ausbreitet.

Der Übergangsbereich 13 führt von der nach außen weisenden Oberfläche 15 des ersten Bereiches 11 zurück in Richtung Installationsgehäuseinnere bis auf die Höhe der nach außen weisenden Oberfläche 16 des zweiten Bereichs 12. Die zum Gehäuse weisenden Oberflächen 17, 18 des ersten Bereichs 11 bzw. zweiten Bereichs 12 gehen dagegen ineinander über; von der Installationsgehäuseinnenseite ist der Verschlusskörper 9 glatt.

Zu vermerken ist, dass zwischen dem ersten Bereich 11 und dem zweiten Bereich 12 kein Spalt oder dergleichen vorgesehen ist; der zweite Bereich 12 ragt bis an den ersten Bereich 11 heran.

Der Verschlusskörper 9 selbst ist gegenüber dem die Ausbrechöffnung 8 umgebenden Material 19 im Wesentlichen in einer Ebene und ragt im Wesentlichen weder nach außen oder nach innen von dem die Ausbrechöffnung 8 umgebenden Material 19 hervor.

Nach außen weisend verfügt der zweite Bereich 12 über von seiner Oberfläche 16 abragende Stege 20, 21, die in zwei Kreissegmenten auf die Oberfläche 16 des zweiten Bereiches 12 aufgebracht sind (siehe auch Figur 1). Die Stege 20, 21 werden gebildet durch einzelne Stegsegmente, sodass in diesem Ausführungsbeispiel eine gestrichelte Linie durch die Stegsegmente, gemeinsam den jeweiligen Steg 20, 21 bildend, geschaffen ist. Die Stege 20, 21 haben nicht nur eine Anzeigefunktion für den Installateur, sondern begrenzen einen möglichen Durchstoßvorgang seitens des Installateurs auf entsprechende Subgrößen der zu bildenden Einführöffnung, sodass, wenn gewünscht, nur ein oder mehrere Teilbereiche 22, 23, 24 des zweiten Bereiches 12, durchaus auch verbunden, als Einführöffnung dienen. Die Stege 20, 21 stabilisieren dann den Rand der geschaffenen Einführöffnung.

In dem hier vorliegenden Ausführungsbeispiel ist das gesamte Installationsgehäuse 1 einschließlich des Verschlusskörpers 9, respektive dessen erster Bereich 11 und zweiter Bereich 12 aus einer einzigen Kunststoffart hergestellt, nämlich einem Hartkunststoff, der dem Installationsgehäuse 1 die erforderliche Formstabilität verleiht.

Um dem zweiten Bereich 12 die notwendige verringerte Durchstoßfestigkeit zu verleihen und gleichzeitig eine gewisse Flexibilität dieses zweiten Bereichs 12 bereitzustellen, damit ein durch die in dem zweiten Bereich 12 bereitgestellte Einführöffnung hindurchgeführtes Langgut möglichst umfänglich anliegt, ist der zweite Bereich 12 als Kunststofffilm bereitgestellt.

In einer anderen Ausgestaltung, die in den Figuren nicht dargestellt ist, kann vorgesehen sein, dass der zweite Bereich aus einem Weichkunststoff bereitgestellt ist, während der erste Bereich aus einem Hartkunststoff bereitgestellt ist. Ein solcher Verschlusskörper, respektive ein solches Installationsgehäuse wird üblicherweise in einem 2K-Spritzgussverfahren hergestellt.

Die Erfindung ist anhand eines Ausführungsbeispiels beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Installationsgehäuse
- 2: Dosenwand
- 3: Dosenboden
- 4: Fasenbereich
- 5.1, 5.2, 6: Kabeleinführung
- 7: Richtungspfeil
- 8: Ausbrechöffnung
- 9: Verschlusskörper
- 10: Sollbruchsteg
- 11: erster Bereich
- 12: zweiter Bereich
- 13: Übergangsbereich
- 14: Kante
- 15: außenseitige Oberfläche des ersten Bereichs
- 16: außenseitige Oberfläche des zweiten Bereichs
- 17: innenseitige Oberfläche ersten Bereichs
- 18: innenseitige Oberfläche des zweiten Bereichs
- 19: die Ausbrechöffnung umgebendes Material
- 20, 21: Steg
- 22, 23, 24: Teilbereich des zweiten Bereichs

## Patentansprüche

1. Installationsgehäuse (1) aus einem Kunststoff mit einer in einem Gehäuseabschnitt angeordneten Ausbrechöffnung (8) zum Einführen eines Langguts wie eines elektrischen oder optischen Leiters, eines Leerrohres oder dergleichen in das Innere des Installationsgehäuses (1), wobei die Ausbrechöffnung (8) im Auslieferungszustand durch einen mit dem Rand der Ausbrechöffnung (8) verbundenen Verschlusskörper (9) zumindest im Wesentlichen geschlossen ist, welcher Verschlusskörper (9) mit dem Gehäuseabschnitt trennbar verbunden ist, sodass durch ein Herausbrechen des Verschlusskörpers (9) die Ausbrechöffnung (8) geöffnet wird, **dadurch gekennzeichnet, dass** der Verschlusskörper (9) einen ersten Bereich (11) erhöhter Durchstoßfestigkeit und einen von dem ersten Bereich (11) zumindest abschnittsweise umgebenden, an den ersten Bereich (11) spaltlos angrenzenden, zweiten Bereich (12) verringerter Durchstoßfestigkeit aufweist, wobei das Installationsgehäuse (1) dazu eingerichtet ist, dass in den zweiten Bereich (12) eine Einführöffnung durch ein Durchstoßen oder Herausschneiden des den zweiten Bereich (12) bereitstellen Material einbringbar ist und wobei die beiden Bereiche durch eine einen sich in den zweiten Bereich (12) ausbreitenden Riss aufhaltende Struktur- und/oder Materialänderung getrennt sind.

2. Installationsgehäuse (1) nach Anspruch 1, **dadurch gekennzeichnet, dass** das zur Erzielung einer geringeren Durchstoßfestigkeit des zweiten Bereichs (12) die Wandstärke gegenüber dem ersten Bereich (11) verringert ist.

3. Installationsgehäuse (1) nach einem der Ansprüche 1 bis 2, **dadurch gekennzeichnet, dass** die nach außen weisende Oberfläche (16) des zweiten Bereichs (12) gegenüber der nach außen weisenden Oberfläche (15) des ersten Bereichs (11) zurückversetzt ist.

4. Installationsgehäuse (1) nach einem der Ansprüche 1 bis 3, **dadurch gekennzeichnet, dass** der zweite Bereich (12) über zumindest einen von seiner Oberfläche (16), insbesondere der nach außen weisenden, abragenden Steg (20, 21) verfügt, der den zweiten Bereich (12) in mehrere Teilbereiche (22, 23, 24) unterteilt.

5. Installationsgehäuse (1) nach einem der Ansprüche 1 bis 4, **dadurch gekennzeichnet, dass** der Verschlusskörper (9) im Wesentlichen in einer Ebene mit dem die Ausbrechöffnung (8) umgebendem Material (19) ist.

6. Installationsgehäuse (1) nach einem der Ansprüche 1 bis 5, **dadurch gekennzeichnet, dass** der Verschlusskörper (9) einheitlich aus einem Hartkunststoff hergestellt ist.

7. Installationsgehäuse (1) nach Anspruch 6, **dadurch gekennzeichnet, dass** der zweite Bereich (12) als Hartkunststofffilm bereitgestellt ist.

8. Installationsgehäuse (1) nach einem der Ansprüche 1 bis 5, **dadurch gekennzeichnet, dass** der Verschlusskörper (9) im Wege eines 2K-Kunststoffgießverfahren, insbesondere einem Spritzgussverfahren, hergestellt ist, wobei der erste Bereich (11) aus einem Hart- und der der zweite Bereich (12) aus einem Weichkunststoff bereitgestellt ist.

9. Installationsgehäuse (1) nach Anspruch 8, **dadurch gekennzeichnet, dass** ein Spalt zwischen Verschlusskörper (9) und Rand der Ausbrechöffnung (8) mit einem Weichkunststoff verfüllt oder überdeckt ist.

10. Installationsgehäuse (1) nach einem der Ansprüche 1 bis 9, **dadurch gekennzeichnet, dass** der zweite Bereich (12) von dem ersten Bereich (11) vollumfänglich umgeben ist.

11. Installationsgehäuse (1) nach einem der Ansprüche 1 bis 10, **dadurch gekennzeichnet, dass** das Installationsgehäuse (1) eine Installationsdose, insbesondere eine Hohlwanddose oder eine Unterputzdose, ist, aufweisend einen Dosenboden (3) und eine Dosenwand (2) und dadurch, dass der Gehäuseabschnitt Teil der Dosenwand (2) und/oder des Dosenbodens (3) ist, bevorzugt im abgerundeten oder abgeflachten Fasenbereich (4) zwischen Dosenboden (3) und -wand (2) ist.
